# EUROPÄISCHE PATENTSCHRIFT

(11) **EP 4 031 393 B1**
(45) Veröffentlichungstag und Bekanntmachung des Hinweises auf die Patenterteilung: **08.01.2025**
(21) Anmeldenummer: 20767799.8
(22) Anmeldetag: 04.09.2020
(51) Int. Cl.: B60K 11/02, B60K 1/00

(54) **THERMOMANAGEMENTSYSTEM UND FAHRZEUG**
THERMAL MANAGEMENT SYSTEM AND VEHICLE
SYSTÈME DE GESTION THERMIQUE ET VÉHICULE

(30) Priorität: 16.09.2019 DE 102019214079
(43) Veröffentlichungstag der Anmeldung: 27.07.2022
(73) Patentinhaber: Vitesco Technologies GmbH, 93055 Regensburg (DE)
(72) Erfinder: ESER, Gerhard, 81737 München (DE); BRETTNER, Sebastian, 81737 München (DE); DILLINGER, Manuel, 81737 München (DE); FEULNER, Markus, 81737 München (DE); ZHANG, Hong, 81737 München (DE)
(74) Vertreter: Vitesco Technologies
(86) Internationale Anmeldenummer: PCT/EP2020/074834
(87) Internationale Veröffentlichungsnummer: WO 2021/052786

(56) Entgegenhaltungen:
- DE-A1- 102017 006 366
- DE-A1- 102017 107 384
- DE-A1- 102018 002 072

## Beschreibung

Die Erfindung betrifft ein Thermomanagementsystem für ein Fahrzeug. Die Erfindung betrifft ferner ein Fahrzeug mit einem solchen Thermomanagementsystem.

Unter einem Fahrzeug ist dabei jede Art von Fahrzeug zu verstehen, welches eine zu temperierende Batterie sowie einen zu temperierenden Elektromotor bzw. E-Motor zum Antrieb des Fahrzeugs umfasst. Die Batterie kann dabei luftgekühlt und/oder kühlmittel- bzw. kühlflüssigkeits- bzw. wassergekühlt sein. Der E-Motor hingegen kann dabei entweder nur ölgekühlt oder sowohl kühlmittel- bzw. kühlflüssigkeits- bzw. wassergekühlt als auch ölgekühlt sein. Dabei kann es sich um ein teilelektrisches oder vollelektrisches Fahrzeug handeln, insbesondere aber um Personenkraftwagen und/oder Nutzfahrzeuge.

Aus der EP 2392486 B1 ist ein Thermomanagementsystem bekannt, welches einen ersten Kühlmittelkreis zur Temperierung einer Batterie und einen zweiten Kühlmittelkreis zur Temperierung eines Elektromotors und einer Leistungselektronik aufweist.

Aus der DE 102017107384 A1 ist ein Fahrzeugdiagnosesystem für eine Frontkühleinheit bekannt.

Aus der DE 102018002072 A1 ist ein System zur Überwachung eines Gasbehälters bekannt.

Aus der DE 102017006366 A1 ist ein Ölkühlkreislauf zur Kühlung eines Elektromotors eines Fahrzeugs bekannt.

Eine der Erfindung zugrunde liegende Aufgabe ist es, ein solches Thermomanagementsystem zu verbessern.

Diese Aufgabe wird durch ein gemäß Anspruch 1 unter Schutz gestelltes Thermomanagementsystem gelöst. Vorteilhafte Ausführungsformen der Erfindung sind Gegenstand der Unteransprüche.

Im Weiteren wird die Erfindung unter Bezugnahme auf Figurendarstellungen im Einzelnen erläutert. Aus den Unteransprüchen und der nachfolgenden Beschreibung bevorzugter Ausführungen ergeben sich weitere vorteilhafte Weiterbildungen der Erfindung. Hierzu zeigen:
- Fig. 1: ein Thermomanagementsystem in einer vorgeschlagenen ersten Ausgestaltung,
- Fig. 2: das in Fig. 1 gezeigte Thermomanagementsystem in Verbindung mit einem Ölkühlkreis in einer ersten Ausgestaltung,
- Fig. 3: das in Fig. 1 gezeigte Thermomanagementsystem in Verbindung mit einem Ölkühlkreis in einer zweiten Ausgestaltung,
- Fig. 4: das in Fig. 1 gezeigte Thermomanagementsystem in Verbindung mit einem Ölkühlkreis in einer dritten Ausgestaltung,
- Fig. 5: Öl-Druckverläufe korrespondierend zu verschiedenen Phasen des Ölkühlkreises,
- Fig. 6: ein erstes Flussdiagramm korrespondierend zu einer vorgeschlagenen Überwachung des Ölkühlkreises in einer Druckaufbauphase,
- Fig. 7: ein zweites Flussdiagramm korrespondierend zu einer vorgeschlagenen Überwachung des Ölkühlkreises in einer Betriebsphase sowie
- Fig. 8: ein drittes Flussdiagramm korrespondierend zu einer vorgeschlagenen Überwachung des Ölkühlkreises in einer Druckabbauphase.

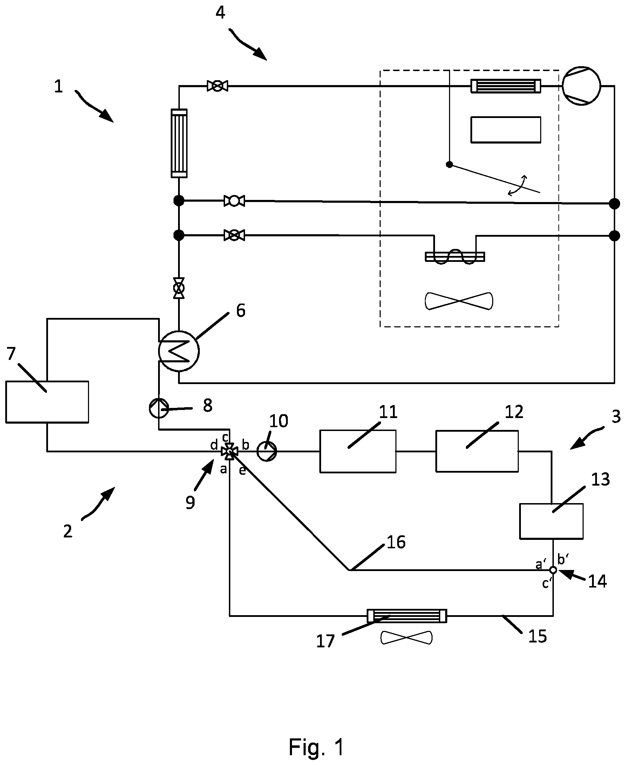

Das Thermomanagementsystem 1 eines Fahrzeugs nach Fig. 1 veranschaulicht einen ersten Kühlmittelkreis 2 für eine Batterie 7 und einen zweiten Kühlmittelkreis 3 für einen E-Motor 13 zum Antrieb des Fahrzeugs, sowie einen Kältemittelkreis 4 einer Klimaanlage, auf den aber im Folgenden nicht näher eingegangen wird. Bei dem Fahrzeug kann es sich dabei um ein batterieelektrisches Fahrzeug (Battery Electric Vehicle, kurz: BEV), ein Hybridelektrokraftfahrzeug (Hybrid Electric Vehicle, kurz: HEV) oder ein Brennstoffzellenfahrzeug (Fuel Cell Electric Vehicle, kurz: FCEV) handeln. Diese drei Kühlkreise 2, 3, 4 verschmelzen dabei gewissermaßen miteinander. In den beiden Kühlmittelkreisen 2, 3 wird die jeweilige Kühlflüssigkeit mittels einer eigenen elektrischen Pumpe 8, 10 gefördert.

Unter einer solchen Kühlflüssigkeit ist dabei eine Mischung von Wasser mit einem Kühlzusatzmittel zu verstehen. Die Kühlflüssigkeit hat dabei nicht nur die Aufgabe, Abwärme aufzunehmen und zu transportieren. Das Kühlzusatzmittel soll dabei das Wasser vor dem Durchfrieren schützen, die beiden Kühlmittelkreise vor Korrosion schützen, die beweglichen Teile in den beiden Kühlmittelkreisen schmieren sowie Kunststoff- und/oder Gummielemente in den beiden Kühlmittelkreisen vor Auflösung schützen.

Der E-Motor 13 und eine Leistungselektronik 12 sollen bei einer Kühlflüssigkeits- bzw. Kühlwassertemperatur von ca. 80 bis maximal 85°C betrieben werden. Dabei hat die Kühlflüssigkeit am Eingang in die Leistungselektronik 12 eine Temperatur von etwa 55°C und am Eingang in den E-Motor 13 eine Temperatur von etwa 65°C. Am Ausgang des E-Motors 13 hat die Kühlflüssigkeit dann eine Temperatur von ca. 80 bis maximal 85°C.

Die Batterie 7 bzw. die Batteriezellen hingegen sollen in einem Kühlflüssigkeits- bzw. Kühlwassertemperaturfenster zwischen ca. 20°C und ca. 40 °C betrieben werden, denn dies stellt einen optimalen Betriebstemperaturbereich der Batterie 7 sicher. Die Temperatur der Batterie 7 bzw. der einzelnen Batteriezellen selbst kann dabei die Temperaturschwelle von ca. 40°C durchaus überschreiten. Beide Kühlmittelkreise 2, 3 müssen Wärme sowohl aufnehmen als auch abgeben können. Während der Batteriekühlmittelkreis 2 über einen Wärmetauscher 6 (auch Chiller genannt; vgl. Fig. 1) gegenüber dem Kältemittelkreis 4 entwärmt wird, kann der E-Motorkühlmittelkreis 3 über einen Radiator bzw. Kühler 17 gegenüber der Umgebung entwärmt werden sowie gegenüber dem Batteriekühlmittelkreis 2 über ein im Folgenden beschriebenes Mehrwegeventil 9 (auch Coolant Flow Control Valve genannt, kurz: CFCV), wobei das Mehrwegeventil 9 eine Schnittstelle zwischen dem Batteriekühlmittelkreis 2 und dem E-Motorkühlmittelkreis 3 darstellt und welches dazu eine entsprechende Ventilstellung einnimmt, so dass sich die Kühlflüssigkeitsströme der beiden Kühlmittelkreise 2, 3 miteinander bedarfsgerecht vermischen können.

Die Entwärmung des Batteriekühlmittelkreises 2 kann auch bei einer entsprechenden Ventilstellung des Mehrwegeventils 9 über den Radiator bzw. Kühler 17 erfolgen. Da aber die Batteriekühlflüssigkeit eine Temperatur von 40 °C nicht überschreiten soll, reicht meist die Entwärmung über den Radiator 17 nicht aus, so dass Wärme über den Wärmtauscher 6 abgeführt werden muss. Im E-Motorkühlmittelkreis 3 ist neben dem E-Motor 13 und der Leistungselektronik 12 auch noch ein Ladegerät 11 (auch Charger genannt) zu kühlen. Zur Regelung der Kühlmittelkreise 2, 3 ist je ein - nicht dargestellter - Temperatursensor vorgesehen. Im Batteriekühlmittelkreis 2 ist ferner ein - nicht dargestellter - Widerstandsheizer vorgesehen, um kurzfristig elektrisch Wärme zuführen zu können.

Mittels des Mehrwegeventils 9 lässt sich das Thermomanagementsystem 1 in unterschiedlichen Modi betreiben. Das Mehrwegeventil 9 ist dabei Teil einer sog. Aktuatoreinheit - auch Kühlwasserventileinheit, Kühlwassersteuerventileinheit oder Kühlwasserregelventileinheit genannt -, die als solche auch eine Antriebseinheit mit einem Elektrostellmotor sowie eine Steuereinheit zur Steuerung des Elektrostellmotors umfasst.

In Sachen dieser Modi wird der Vollständigkeit halber auf die deutsche Patentanmeldung mit dem Aktenzeichen 10 2019 210 577.7 verwiesen, die darauf detailliert eingeht.

In einem ersten Modus des Systems (Use Case 1, kurz: UC1 = Reihenschaltung R mit maximaler Wärmerückgewinnung) und in einer ersten Ventilstellung des Mehrwegeventils 9 lässt sich der Kühlmittelkreis 2 in Reihe zum Kühlmittelkreis 3 schalten. Dabei strömt bezüglich des Mehrwegeventils 9 Kühlflüssigkeit über einen Zufluss bzw. Eingang a und einen Abfluss bzw. Ausgang c vom Kühlmittelkreis 3 in den Kühlmittelkreis 2 und schließlich über einen Zufluss bzw. Eingang d und einen Abfluss bzw. Ausgang b vom Kühlmittelkreis 2 zurück in den Kühlmittelkreis 3.

Diese Reihenschaltung bewirkt eine schnelle Erwärmung des Batteriekühlmittelkreises 2 unter Ausnutzung der Abwärme des E-Motors 13 sowie der Leistungselektronik 12. Der E-Motorkühlmittelkreis 3 hat somit auch die Funktion eines Heizkreises.

In einem zweiten Modus des Systems (Use Case 2, kurz: UC2 = Parallelschaltung P mit Überhitzungsschutz) und in einer zweiten Ventilstellung des Mehrwegeventils 9 lässt sich der Kühlmittelkreis 2 parallel zum Kühlmittelkreis 3 schalten, so dass die beiden Kühlmittelkreise 2, 3 fluidisch voneinander getrennt sind. Diese Trennung schützt die Batterie 7 vor einer Überhitzung.

Darüber hinaus wird auch ein dritter Modus des Systems (Use Case 3, kurz: UC3 = Mischmodus M mit selektiver Wärmerückgewinnung) vorgeschlagen, in welchem das Mehrwegeventil 9 in eine Zwischenstellung - d.h. eine dritte Ventilstellung - geschaltet ist, in welcher sich die Kühlflüssigkeitsströme der beiden Kühlmittelkreise 2, 3 miteinander bedarfsweise vermischen.

Durch einen solchen Mischmodus lässt sich sowohl die Kühlflüssigkeitstemperatur des Batteriekühlmittelkreises 2 als auch die Kühlflüssigkeitstemperatur des E-Motorkühlmittelkreises 13 genauer regeln. Es unterbleiben dabei vorteilhafterweise hohe Druck- und Temperatursprünge in den beiden Kühlmittelkreisen 2, 3, da ein häufiges Umschalten zwischen dem Reihenschaltungsmodus R und dem Parallelschaltungsmodus P unterbleibt.

In der hier vorgeschlagenen Ausführung (vgl. z.B. Fig. 1) ist das Mehrwegeventil 9 in Gestalt eines 5/3-Wegeventils ausgebildet. Dabei muss man sich auch einen aus der Ebene der Fig. 1 herausragenden Zufluss bzw. Eingang e des 5/3-Wegeventils vorstellen, der als solcher über einen Bypass-Pfad 16 mit einem Knotenpunkt 14 (bzw. dessen Abfluss a^{I}) stromabwärts des E-Motors 13 fluidisch verbunden ist, wobei dem Knotenpunkt 14 sowohl der Bypass-Pfad 16 als auch ein dazu paralleler Pfad 15 mit einem Radiator 17 entspringt. Der Radiatorpfad 15 verbindet den Knotenpunkt 14 (bzw. dessen Abfluss c^{I}) fluidisch mit dem Zufluss bzw. Eingang a des 5/3-Wegeventils.

Anstelle des besagten 5/3-Wegeventils ließe sich auch ein Mehrwegeventil in Gestalt eines 4/2-Wegeventils verwenden, über welches sich die zuvor beschriebenen Systemmodi und Ventilstellungen ebenfalls einstellen bzw. ansteuern lassen. Dabei ist im Kühlmittelkreis 3 stromabwärts des E-Motors 13 - anstelle des zuvor genannten Knotenpunktes - ein weiteres Mehrwegeventil in Gestalt eines 3/2-Wegeventils vorzusehen, welches mit dem Zufluss bzw. Eingang a des 4/2-Wegeventils fluidisch verbunden ist.

In Sachen dieser alternativen Ausgestaltung wird der Vollständigkeit halber ebenfalls auf die deutsche Patentanmeldung mit dem Aktenzeichen 10 2019 210 577.7 verwiesen, die darauf detailliert eingeht.

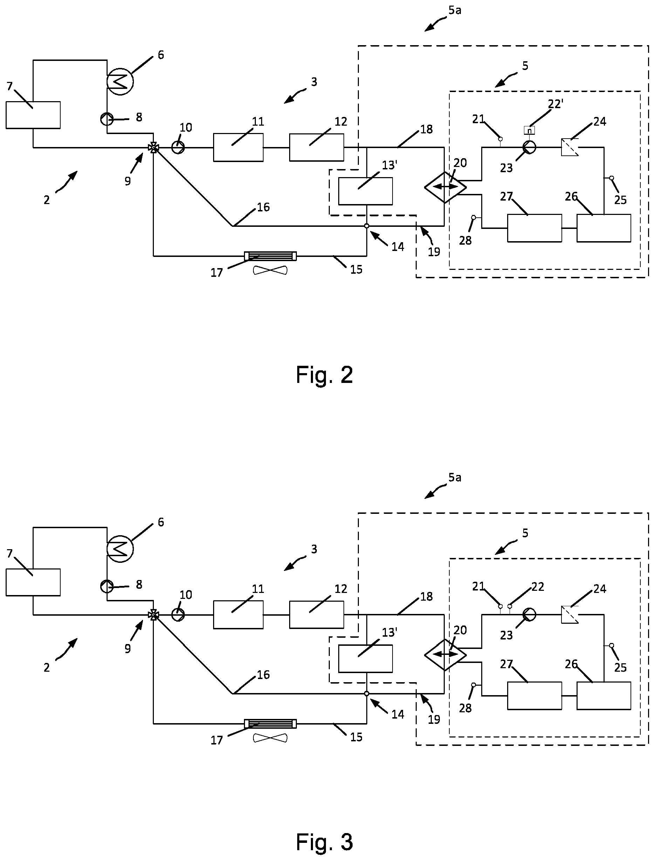

Das Thermomanagementsystem 1 umfasst ferner ein Ölkühlsystem 5a mit einem Ölkühlkreis 5 (vgl. Fig. 2, Fig. 3, Fig. 4) zur zusätzlichen Kühlung des E-Motors 13. Der Ölkühlkreis 5 ist dabei mittels eines Wärmetauschers 20 an den Kühlmittelkreis 3 thermisch angebunden. Der Ölkühlkreis 5 umfasst neben einem Teil des Wärmetauschers 20 den Rotor 27 des E-Motors 13 sowie ein Getriebe bzw. Untersetzungs- und/oder Übersetzungsgetriebe 26, z.B. in Gestalt eines dreistufigen Getriebes, welches mit dem E-Motor 13 (bzw. Stator 13^{I} und Rotor 27), eine E-Motor-Getriebe-Antriebseinheit bildet. Der Ölkühlkreis 5 umfasst ferner eine Ölpumpe 23, einen der Ölpumpe 23 fluidisch vorgeschalteten Ölfilter 24 sowie zwei Temperatursensoren 25, 28 (vgl. Fig. 2, Fig. 3, Fig. 4).

Der Stator 13^{I} des E-Motors 13 hingegen ist vom Kühlmittelkreis 3 umfasst, d.h., dass der Stator 13^{I} kühlflüssigkeits- bzw. wassergekühlt ist.

Über den Wärmetauscher 20 wird die vom Ölkühlkreis 5 aufgenommene Abwärme des E-Motors 13 - bzw. Stators 13^{I} und Rotors 27 - dem Kühlmittelkreis 3 zugeführt. Dabei ist der Wärmetauscher 20 fluidisch parallel zum kühlflüssigkeits- bzw. wassergekühlten Stator 13^{I} angeordnet.

Eine erste Zuleitung 18 führt dabei von einem Knotenpunkt des Kühlmittelkreises 3 stromaufwärts des Stators 13^{I} zum Wärmetauscher 20 und eine zweite Zuleitung 19 vom Wärmetauscher 20 zum besagten Knotenpunkt 14 stromabwärts des Stators 13^{I}.

Durch eine Welle des Rotors 27 wird ein Öl, welches auch zur Schmierung und Kühlung des Getriebes 26 verwendet wird, bis zu mindestens einer Austrittsstelle des Rotors 27 gefördert. Von dieser Austrittsstelle wird das Öl fliehkraftbedingt gegen die Wicklungen des Stators 13^{I} geschleudert, wobei sich das Öl über den Rotor 27 verteilt und dabei auch bis zu den beiden Lagerstellen der Rotorwelle gelangt. Das Öl fließt schließlich bis in eine Ölwanne, die am Stator 13^{I} angebracht ist und von der es aufgenommen wird. Die Ölpumpe 23 saugt das Öl aus der Ölwanne an und fördert es.

Das Öl kühlt dabei den E-Motor 13 zusätzlich zur Kühlflüssigkeit des E-Motorkühlmittelkreises, indem es die Abwärme des Stators 13^{I} und des Rotors 27 aufnimmt, und schmiert zugleich die besagten Lagerstellen der Rotorwelle.

Der Ölkühlkreis 5 umfasst zudem ein Überwachungssystem zur Überwachung des Ölflusses. Das Überwachungssystem umfasst dabei einen Drucksensor 21. Erfindunngsgemäß wird ein zusätzlicher Drucksensor 22 vorgeschlagen, um mittels erfasster Drücke Druckdifferenzen ermitteln zu können. Durch die Verwendung der beiden Drucksensoren 21, 22 lassen sich die Kosten eines solchen Überwachungssystems signifikant reduzieren. Dabei wird vorgeschlagen, die beiden Drucksensoren 21, 22 vorzugsweise stromaufwärts des Wärmetauschers 20 und stromabwärts der Ölpumpe 23 anzuordnen. In Fig. 3 sind die beiden Drucksensoren 21, 22 im Unterschied zur Fig. 2 integraler Bestandteil eines Sensormoduls 20a.

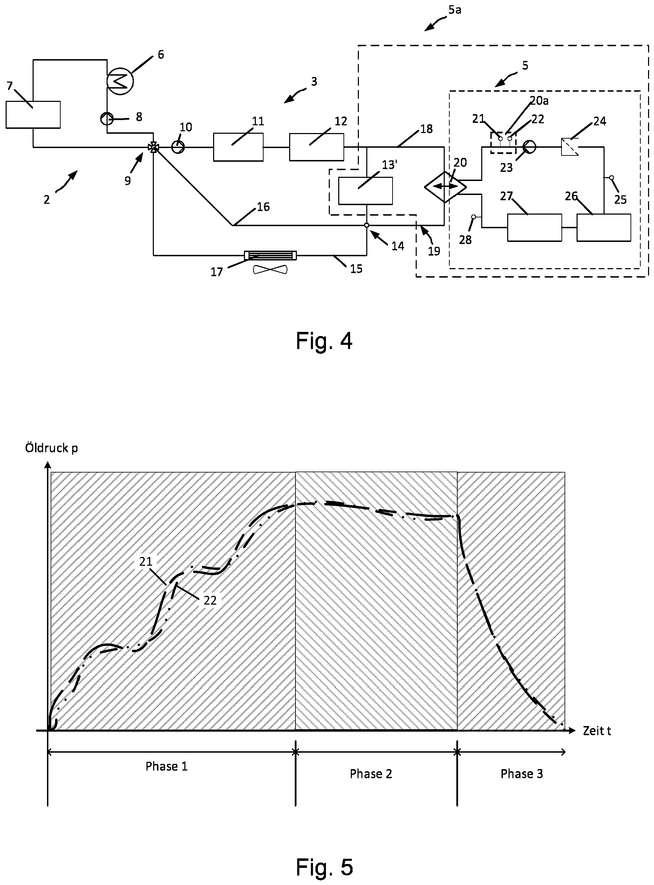

Fig. 5 veranschaulicht mittels der beiden Drucksensoren 21, 22 erfasste Druckverläufe korrespondierend zum Ölfluss im Ölkühlkreis 5 in drei aufeinanderfolgenden Phasen, und zwar:
- in einer Druckaufbauphase (Phase I),
- in einer Betriebsphase (Phase II), welche auf die Druckaufbauphase folgt, und
- in einer Druckabbauphase (Phase III), welche auf die Betriebsphase folgt.

Zur Überwachung des Ölflusses werden dabei bezüglich der einzelnen Phasen I bis **III** Druck-Differenzwerte zwischen den beiden Druckverläufen ermittelt. Diese Druck-Differenzwerte werden dann mit einem vorgebbaren und phasenbezogenen Vergleichswert - auch Schwellwert bzw. Referenzwert genannt - für die Druck-Differenz verglichen, um auf einen Fehler zu überprüfen, wobei bei einer Überschreitung des Vergleichswertes auf einen Fehler erkannt wird.

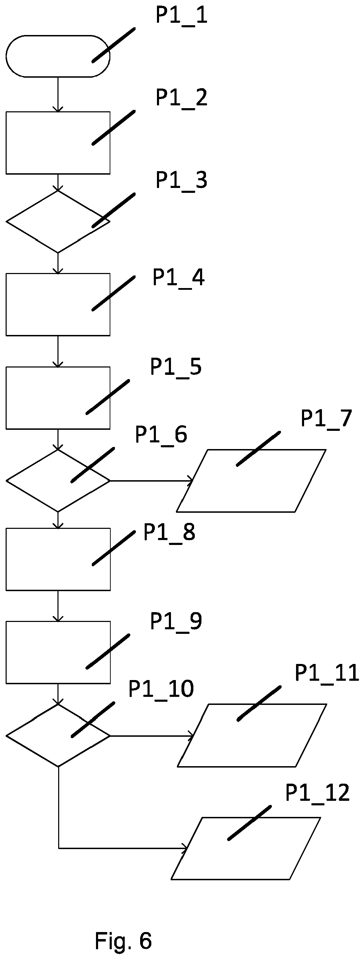

Noch bevor die Ölpumpe 23 und somit der Ölkühlkreis 5 in Betrieb genommen bzw. aktiviert wird - d.h. noch vor Einleitung der Druckaufbauphase (Phase I) -, wird vorgeschlagen, auf einen elektrischen Fehler des Überwachungssystems (bzw. Sensorfehler), d.h. z.B. auf einen Kurzschluss oder Kabelbruch zu überprüfen (vgl. dazu die Schritte P1_1 bis P1_7 in Fig. 6).

Dazu lässt man ab dem Zeitpunkt der Einleitung dieser Überprüfung (vgl. Schritt P1_1, Fig. 6) eine Mindestzeit bzw. Entprellzeit verstreichen (vgl. Schritt P1_2, Fig. 6), um sicherzustellen, dass der Ölkühlkreis 5 stillsteht und der Druck innerhalb des Ölkühlkreises 5 abgebaut ist. Im Schritt P1_3 wird diese Bedingung überprüft. Danach werden die Signale der Drucksensoren 21, 22 zu mindestens einem Zeitpunkt diskret erfasst und für diesen Zeitpunkt ein Druckdifferenzwert ermittelt (vgl. Schritt P1_4, Fig. 6). Dieser Druckdifferenzwert wird dann im Schritt P1_5 mit einem vorgebbaren, ersten Druck-Vergleichswert SW1 verglichen. Überschreitet der Druckdifferenzwert den Druck-Schwellwert SW1 in Schritt P1_6, so wird auf einen solchen elektrischen Fehler des Überwachungssystems (bzw. Sensorfehler) erkannt (vgl. Schritt P1_7, Fig. 6). Andernfalls liegt ein fehlerfreies Überwachungssystem vor.

In Schritt P1_8 wird die Ölpumpe 23 und somit der Ölkühlkreis 5 in Betrieb genommen bzw. aktiviert, wodurch die Druckaufbauphase (Phase I) eingeleitet wird. Dabei werden die Signale der Drucksensoren 21, 22 zu mindestens einem Druckhub der Ölpumpe 23 - bei der es sich um eine Verdränger-Pumpe handelt - diskret erfasst (vgl. Schritt P1_8, Fig. 6). Ein solcher Druckhub während der Druckaufbauphase (Phase I) ist in Fig. 5 eindeutig zu erkennen. Alsdann wird zumindest ein Druck-Differenzwert ermittelt (vgl. Schritt P1_8, Fig. 6) und der Druck-Differenzwert dann mit einem vorgebbaren, zweiten Druck-Vergleichswert SW2 (phasenbezogener Vergleichswert für die Druck-Differenz) verglichen (vgl. Schritt P1_9, Fig. 6). Zusätzlich dazu kann auch die Zeit bis zum Erreichen des Druckhubs mit einem vorgebbaren Zeit-Vergleichswert verglichen werden.

Für den Fall, dass der ermittelte Druckdifferenzwert einerseits sowie ggf. auch der ermittelte Zeitwert andererseits den jeweils zugeordneten Vergleichswert überschreiten (vgl. Schritt P1_10, Fig. 6), wird auf einen solchen Fehler in der Druckaufbauphase (Phase I) erkannt (vgl. Fehlerausgabe in Schritt P1_11, Fig. 6). Andernfalls liegt eine fehlerfreie Druckaufbauphase (Phase I) vor (vgl. Schritt P1_12, Fig. 6).

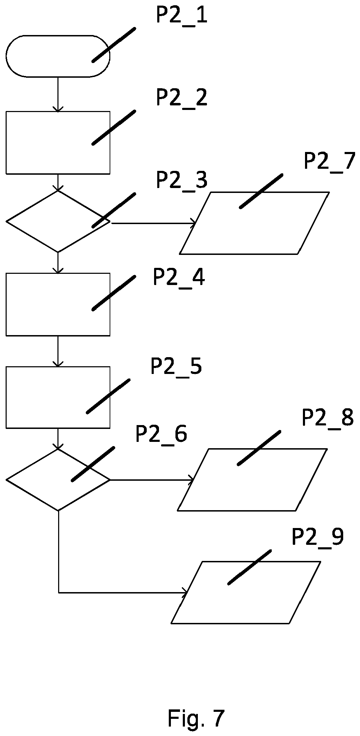

Nach einer Einleitung der Betriebsphase (Phase II, vgl. Schritt P2_1, Fig. 7), die auf die Druckaufbauphase (Phase I) folgt, werden die Signale der Drucksensoren 21, 22 erneut diskret, d.h. zu mindestens einem Zeitpunkt erfasst und für diesen Zeitpunkt ein Druckdifferenzwert aus den beiden Sensorsignalen ermittelt (vgl. Schritt P2_2, Fig. 7). Dieser Druckdifferenzwert wird dann mit einem vorgebbaren, dritten Druck-Vergleichswert SW3 (phasenbezogener Vergleichswert für die Druck-Differenz) verglichen (vgl. auch Schritt P2_2, Fig. 7), um auf einen elektrischen Fehler des Überwachungssystems (bzw. Sensorfehler) zu überprüfen. Überschreit der ermittelte Druckdifferenzwert den Druck-Vergleichswert SW3 (vgl. Schritt P2_3, Fig. 7), so wird auf einen solchen elektrischen Fehler des Überwachungssystems (bzw. Sensorfehler) erkannt (vgl. Schritt P2_7, Fig. 7).

Im Anschluss daran wird aus den diskret erfassten Signalen der beiden Drucksensoren 21, 22 ein Mittelwert gebildet (vgl. Schritt P2_4, Fig. 7) und dieser Mittelwert bzw. Druckmittelwert dann mit einem vorgebbaren, vierten Druck-Vergleichswert (phasenbezogener Vergleichswert für die Druck-Differenz) verglichen (vgl. Schritt P2_5, Fig. 7), um auf einen Fehler in der Betriebsphase (Phase II) zu überprüfen. Überschreitet dieser Druckmittelwert in Schritt P2_6 den Vergleichswert, so wird auf einen solchen Fehler in der Betriebsphase (Phase II) erkannt (vgl. Schritt P2_8, Fig. 7). Andernfalls liegt eine fehlerfreie Betriebsphase (Phase II) vor (vgl. Schritt P2_9, Fig. 7).

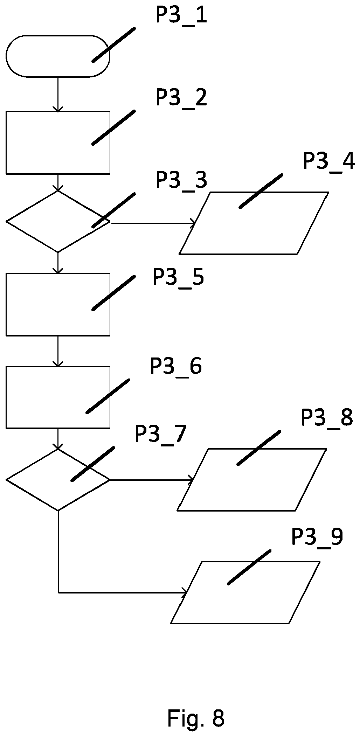

Nach einer Deaktivierung bzw. Außerbetriebnahme der Ölpumpe 23 (vgl. Schritt P3_1, Fig. 8), mit welcher die Druckabbauphase (Phase III) eingeleitet wird, werden die Signale der Drucksensoren 21, 22 zu mindestens einem Zeitpunkt erneut diskret erfasst (vgl. Schritt P3_2, Fig. 8). Alsdann wird für diesen Zeitpunkt ein Druck-Differenzwert ermittelt und dieser Druck-Differenzwert dann mit einem vorgebbaren, fünften Druck-Vergleichswert SW5 (phasenbezogener Vergleichswert für die Druck-Differenz) verglichen (vgl. auch Schritt P3_2, Fig. 8), um auf einen elektrischen Fehler des Überwachungssystems (bzw. Sensorfehler) zu überprüfen. Überschreitet dieser Druck-Differenzwert in Schritt P3_3 den Druck-Vergleichswert, wird auf einen solchen elektrischen Fehler des Überwachungssystems (bzw. Sensorfehler) erkannt (vgl. Schritt P3_4, Fig. 8). Andernfalls liegt ein fehlerfreies Überwachungssystem vor.

Danach wird ein Druckabfall überwacht, indem nach einer vorgebbaren Zeit bzw. Entprellzeit (vgl. Schritt P3_5, Fig. 8) bezüglich der Einleitung der Druckabbauphase (Phase III) die beiden diskret erfassten Drücke bzw. Drucksensorwerte mit einem vorgebbaren, auf die Entprellzeit bezogenen Zielwert (sechster Druck-Vergleichswert SW6; phasenbezogener Vergleichswert für die Druck-Differenz) verglichen werden, um auf einen Fehler in der Druckabbauphase (Phase III) zu überprüfen. Wird dieser Zielwert überschritten (vgl. Schritt P3_7, Fig. 8), wird auf einen solchen Fehler in der Druckabbauphase (Phase III) erkannt (vgl. Schritt P3_8, Fig. 8). Andernfalls liegt eine fehlerfreie Druckabbauphase (Phase III) vor (vgl. Schritt P3_9, Fig. 8).

In Bezug auf die einzelnen Phasen I, II, III wird vorgeschlagen, die Drucksensorwerte z.B. alle 10 bis 100ms zu erfassen. Die zuvor genannten phasenbezogenen Vergleichswerte können dabei phasenbezogen variieren, d.h. phasenspezifisch sein.

Obwohl in der vorhergehenden Beschreibung exemplarische Ausführungen erläutert werden, sei darauf hingewiesen, dass eine Vielzahl von Abwandlungen im Rahmen des nur durch die beigefügten Ansprüche definierten Schutzbereichs möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere im Hinblick auf die Funktion und Anordnung der beschriebenen Bestandteile, vorgenommen werden können, ohne den Schutzbereich (NUR durch die beigefügten Ansprüche definiert) zu verlassen.

## Patentansprüche

1. Thermomanagementsystem für ein Fahrzeug mit einer zu temperierenden Batterie (7) und einem zu temperierenden Elektromotor (13, 13^{I}, 27) zum Antrieb des Fahrzeug, wobei der Elektromotor (13, 13^{I}, 27) zumindest ölgekühlt ist, wobei das Thermomanagementsystem ein Überwachungssystem zur Überwachung eines mittels einer Ölpumpe (23) erzeugten Ölflusses in einem den Elektromotor (13, 13^{I}, 27) umfassenden Ölkühlkreis (5) aufweist, wobei das Überwachungssystem an einer ersten Stelle des Ölkühlkreises einen ersten Drucksensor (21) und an einer zweiten Stelle des Ölkühlkreises einen zweiten Drucksensor (22) aufweist, um mittels erfasster Drücke Druckdifferenzen zu ermitteln und diese Druckdifferenzen mit einem vorgebbaren und phasenbezogenen Vergleichswert für die Druckdifferenz zu vergleichen und dabei auf einen Fehler zu überprüfen, wobei bei einer Überschreitung des Vergleichswertes auf einen Fehler erkannt wird.

2. Thermomanagementsystem (1) nach Anspruch 1, wobei der Stator (13^{I}) des Elektromotors (13) von einem Kühlmittelkreis (3) umfasst ist, wohingegen der Rotor (27) des Elektromotors (13) vom Ölkühlkreis (5) umfasst ist, wobei der Ölkühlkreis (5) über einen Wärmetauscher (20) an den Kühlmittelkreis (3) thermisch angebunden ist.

3. Thermomanagementsystem (1) nach Anspruch 1 oder 2, wobei der erste Drucksensor (21) und der zweite Drucksensor (22) stromaufwärts eines/des Wärmetauschers (20) und stromabwärts der Ölpumpe (23) angeordnet sind.

4. Thermomanagementsystem (1) nach Anspruch 2 oder 3, wobei der Wärmetauscher (20) fluidisch parallel zum kühlmittelgekühlten Stator (13^{I}) angeordnet ist.

5. Thermomanagementsystem (1) nach Anspruch 4, wobei eine erste Zuleitung (18) von einem Knotenpunkt des Kühlmittelkreises (3) stromaufwärts des Stators (13^{I}) zum Wärmetauscher (20) führt und eine zweite Zuleitung (19) vom Wärmetauscher (20) zu einem Knotenpunkt (18) des Kühlmittelkreises (3) stromabwärts des Stators (13^{I}).

6. Fahrzeug mit einem Thermomanagementsystem (1) nach einem der Ansprüche 1 bis 5.

7. Verwendung eines ersten Drucksensors (21) an einer ersten Stelle eines Ölkühlkreises (5) und eines zweiten Drucksensors (22) an einer zweiten Stelle des Ölkühlkreises (5) zur Überwachung eines mittels der Ölpumpe (23) erzeugten Ölflusses in einem einen Elektromotor (13, 13^{I}, 27) umfassenden Ölkühlkreis (5) eines Thermomanagementsystems nach einem der vorhergehenden Ansprüche 1 bis 5, wobei mittels erfasster Drücke Druckdifferenzen ermittelt werden, wobei diese Druckdifferenzen mit einem vorgebbaren und phasenbezogenen Vergleichswert für die Druckdifferenz verglichen werden, um auf einen Fehler zu überprüfen, wobei bei einer Überschreitung des Vergleichswertes auf einen Fehler erkannt wird.

## Claims

1. Thermal management system for a vehicle having a battery (7), the temperature of which is to be controlled, and an electric motor (13, 13^{I}, 27), the temperature of which is to be controlled, for driving the vehicle, the electric motor (13, 13^{I}, 27) being at least oil-cooled, wherein the thermal management system comprises a monitoring system for monitoring an oil flow produced by means of an oil pump (23) in an oil cooling circuit (5) comprising the electric motor (13, 13^{I}, 27), wherein the monitoring system has a first pressure sensor (21) at a first position in the oil cooling circuit and a second pressure sensor (22) at a second position in the oil cooling circuit, in order to use measured pressures to determine pressure differences and to compare these pressure differences with a predeterminable and phase-related comparison value for the pressure difference and to check for an error, an error being detected if the comparison value is exceeded.

2. Thermal management system (1) according to Claim 1, wherein the stator (13^{I}) of the electric motor (13) is comprised of a coolant circuit (3), whereas the rotor (27) of the electric motor (13) is comprised of the oil cooling circuit (5), the oil cooling circuit (5) being thermally connected to the coolant circuit (3) via a heat exchanger (20).

3. Thermal management system (1) according to Claim 1 or 2, wherein the first pressure sensor (21) and the second pressure sensor (22) are arranged upstream of a/the heat exchanger (20) and downstream of the oil pump (23).

4. Thermal management system (1) according to Claim 2 or 3, wherein the heat exchanger (20) is arranged fluidically in parallel with the coolant-cooled stator (13^{I}) .

5. Thermal management system (1) according to Claim 4, wherein a first supply line (18) is routed from a node of the coolant circuit (3) upstream of the stator (13^{I}) to the heat exchanger (20) and a second supply line (19) is routed from the heat exchanger (20) to a node (18) of the coolant circuit (3) downstream of the stator (13^{I}).

6. Vehicle having a thermal management system (1) according to one of Claims 1 to 5.

7. Use of a first pressure sensor (21) at a first position in an oil cooling circuit (5) and of a second pressure sensor (22) at a second position in the oil cooling circuit (5) for monitoring an oil flow produced by means of the oil pump (23) in an oil cooling circuit (5), comprising an electric motor (13, 13^{I}, 27), of a thermal management system according to one of the preceding Claims 1 to 5, wherein measured pressures are used to determine pressure differences, these pressure differences being compared with a predeterminable and phase-related comparison value for the pressure difference in order to check for an error, an error being detected if the comparison value is exceeded.

## Revendications

1. Système de gestion thermique pour un véhicule, comprenant une batterie (7), dont il faut réguler la température, et un moteur électrique (13, 13^{I}, 27), dont il faut réguler la température, pour entraîner le véhicule, dans lequel le moteur électrique (13, 13^{I}, 27) est au moins refroidi à l'huile, dans lequel le système de gestion thermique présente un système de surveillance d'un flux d'huile généré au moyen d'une pompe à huile (23) dans un circuit de refroidissement à l'huile (5) comprenant le moteur électrique (13, 13^{I}, 27), dans lequel le système de surveillance présente à un premier endroit du circuit de refroidissement à l'huile un premier capteur de pression (21) et à un deuxième endroit du circuit de refroidissement à l'huile un deuxième capteur de pression (22) afin d'établir des différences de pression au moyen de pressions détectées et pour comparer ces différences de pression avec une valeur de comparaison prédéfinissable et relative à la phase pour la différence de pression et pour la contrôler quant à une erreur, dans lequel une erreur est identifiée en cas de dépassement de la valeur de comparaison.

2. Système de gestion thermique (1) selon la revendication 1, dans lequel le stator (13^{I}) du moteur électrique (13) est compris dans un circuit d'agent réfrigérant (3), alors que le rotor (27) du moteur électrique (13) est compris dans le circuit de refroidissement à l'huile (5), le circuit de refroidissement à l'huile (5) étant relié thermiquement au circuit d'agent réfrigérant (3) par l'intermédiaire d'un échangeur de chaleur (20).

3. Système de gestion thermique (1) selon la revendication 1 ou 2, dans lequel le premier capteur de pression (21) et le deuxième capteur de pression (22) sont disposés en amont d'un/de l'échangeur de chaleur (20) et en aval de la pompe à huile (23).

4. Système de gestion thermique (1) selon la revendication 2 ou 3, dans lequel l'échangeur de chaleur (20) est disposé fluidiquement en parallèle au stator (13^{I}) refroidi par un agent réfrigérant.

5. Système de gestion thermique (1) selon la revendication 4, dans lequel une première conduite d'alimentation (18) mène d'un nœud du circuit d'agent réfrigérant (3) en amont du stator (13^{I}) à l'échangeur de chaleur (20) et une deuxième conduite d'alimentation (19) mène de l'échangeur de chaleur (20) à un nœud (18) du circuit d'agent réfrigérant (3) en aval du stator (13^{I}).

6. Véhicule comprenant un système de gestion thermique (1) selon l'une des revendications 1 à 5.

7. Utilisation d'un premier capteur de pression (21) à un premier endroit d'un circuit de refroidissement à l'huile (5) et d'un deuxième capteur de pression (22) à un deuxième endroit du circuit de refroidissement à l'huile (5) pour surveiller un flux d'huile généré au moyen de la pompe à huile (23) dans un circuit de refroidissement à huile (5) comprenant un moteur électrique (13, 13^{I}, 27) d'un système de gestion thermique selon l'une quelconque des revendications 1 à 5, dans lequel des différences de pression sont établies au moyen de pressions détectées, dans lequel ces différences de pression sont comparées avec une valeur de comparaison prédéfinissable et relative à la phase pour effectuer un contrôle d'erreur, dans lequel une erreur est identifiée en cas de dépassement de la valeur de comparaison.
